(19) **Europäisches Patentamt / European Patent Office / Office européen des brevets**

(11) **EP 1 593 702 B1**

(12) **EUROPEAN PATENT SPECIFICATION**

(45) Date of publication and mention
of the grant of the patent:
**26.12.2007 Bulletin 2007/52**

(51) Int Cl.:
*C08G 63/83* (2006.01)     *C08G 63/183* (2006.01)
*C08G 63/80* (2006.01)     *D01F 6/84* (2006.01)
*C08J 5/18* (2006.01)

(21) Application number: **04010616.3**

(22) Date of filing: **05.05.2004**

(54) **Process for the production of polyethylene terephthalate copolyester**

Verfahren zur Herstellung von Copolyestern aus Polyethylenterephthalat

Procédé de fabrication de copolyesters à base de polyéthylène téréphtalate

(84) Designated Contracting States:
**AT BE BG CH CY CZ DE DK EE ES FI FR GB GR HU IE IT LI LU MC NL PL PT RO SE SI SK TR**

(43) Date of publication of application:
**09.11.2005 Bulletin 2005/45**

(73) Proprietor: **Saudi Basic Industries Corporation
Riyadh 11422 (SA)**

(72) Inventors:
 • **Bashir, Zahir
   Riyadh 11551 (SA)**
 • **Siddiqui, Jamil
   Riyadh 11551 (SA)**
 • **Sampath, Venkatanathan
   Riyadh 11551 (SA)**
 • **Al Luhaidan, Khalid
   Riyadh 11551 (SA)**

(74) Representative: **Krijgsman, Willem
SABIC Europe
Patent Department
P.O.Box 3008
6160 GA Geleen (NL)**

(56) References cited:
EP-A- 1 013 692      FR-A- 1 436 968
GB-A- 1 047 072      GB-A- 1 047 429
US-A- 3 070 575      US-A- 4 104 263
US-A- 5 008 230      US-A- 5 302 686
US-A- 5 608 031      US-A1- 2002 120 094

• DATABASE WPI Section Ch, Week 199425
Derwent Publications Ltd., London, GB; Class
A25, AN 1994-206530 XP002296444 -& JP 06
145312 A (MITSUBISHI RAYON CO LTD) 24 May
1994 (1994-05-24)

EP 1 593 702 B1

**Description**

The present invention relates to a process for the production of polyethylene terephthalate copolyester.

PET is produced in two steps by one of two ways, called the DMT and the PTA processes, or the transesterfication and direct esterification routes, respectively. The applications for PET include fibres and filaments, films, and bottle-grade chips. Modem plants are based on the PTA process and further, they incorporate direct product formation (fibres and filaments, films) by extruding the melt from the final polycondensation reactor.

First we shall contrast the DMT and the PTA processes. The main difference is the starting material. The older process used dimethyl terephthalate (DMT) and ethylene glycol (EG) as starting materials. This was because of the non-availability of terephthalic acid of sufficient purity in the early years of polyester production. In the DMT process, in the first step, DMT is trans-esterified with ethylene glycol (EG) to produce an intermediate called diethylene glycol terephthalate (DGT) plus a small amount of low oligomers. The reaction byproduct is methanol and this is distilled off. The DGT is alternatively called bis hydroxy ethyl terephthalate or BHET in the literature. Manganese (II) acetate or zinc (II) acetate is typically used for this transesterification step, these being the best catalysts for this reaction. In the second step, the DGT is heated to about 280°C under high vacuum to carry out melt-phase polycondensation. The principal volatile eliminated is EG. For the second step in the DMT route, the catalyst from the first step (zinc or manganese) is sequestered or deactivated with phosphoric acid (see U.S. patent 5898059), and another catalyst for polycondensation, most commonly antimony triacetate or antimony trioxide is added. This is because zinc and manganese are considered poor polycondensation catalysts. The literature indicates that the reactivity of metals for the polycondensation reaction (second step) follows the trend Ti>Sn>Sb>Ge>Mn>Zn (see T.H. Shah, J.I. Bhatty, G.A. Gamlen and D. Dollimore, Polymer, 25, 1333 (1984)). Moreover, Shah et al. indicate that for the first step, namely the transesterification of DMT with EG, the catalytic activity trend follows the reverse order, with zinc being amongst the most active. For the polycondensation reaction, Sb compounds are commercially established (compared with Sn and Ti) because the resulting polymer has the most favourable balance of properties. Note, in an usual operation, it is possible to go from step 1 to step 2 without isolating the DGT. However, if desired, the DGT and oligomers formed in step 1 can be isolated and used later for melt polycondensation (step 2).

The newer industrial method uses purified terephthalic acid (PTA) instead of DMT and is called the PTA process. In step 1, PTA is esterified with EG to form DGT and oligomers. The main byproduct that is distilled off is water, instead of methanol. This step can be self-catalysed - that is, a catalyst is not necessary. However, the polycondensation catalyst (that plays a role later in step 2) may be included at this step. The second step is the same as in the DMT process. A polycondensation catalyst, again most commonly antimony triacetate or trioxide, is added at levels of 200-300 ppm (wt./wt antimony metal with respect to PET). Again, the molten DGT is heated at ~280°C under vacuum to cause polycondensation. After the melt reaches a suitable intrinsic viscosity (I.V.), the polymer is discharged from the reactor and may be directly spun into fibres or may be used to form chips, or extruded into films. The I.V. is related to molecular weight. The metal content of the PTA polymer is less than the DMT polymer, as only one catalyst (for polycondensation) is used for step 2, and hence the thermal stability of the polymer is higher.

As mentioned above, antimony has become the established polycondensation catalyst in the PTA process as well. Unlike the DMT process, where zinc is used for the transesterification step and then is sequestered before polycondensation, there is no case for using zinc in the PTA process - its polycondensation activity is simply not good enough as disclosed by T.H. Shah et al. [see Polymer, 25, 1333 (1984)] and K. Tomita [see K. Tomita, Polymer, 17, 221 (1976)]. Thus the established polycondensation catalyst in the PTA process is antimony. Antimony-based catalysts account for over 90% of current industrial production. Antimony shows a good balance between polycondensation speed, polymer properties and thermal stability towards degradation. However, one disadvantage with PET made with antimony compounds is the gray colour resulting from precipitation of antimony metal. Further, antimony is relatively expensive and there is concern that it may be environmentally hazardous.

Germanium catalysts are used industrially as an alternative to antimony, but mostly in Japan due to environmental legislation. These give a very bright polymer, without the gray cast. But the disadvantage is the high cost of germanium compounds.

In recent times, there are great efforts being made to find non-antimony catalysts. There has been a revival of interest in titanium compounds. Titanium catalysts on a mole metal ion basis are the most active in terms of polycondensation rate (see T.H. Shah, J.I. Bhatty, G.A. Gamlen and D. Dollimore, Polymer, 25, 1333 (1984)) but these give a strong, yellow tint to the polymer that is difficult to colour-compensate afterwards. Further, the titanium compounds used for PET catalysts have to be specially synthesized for the purpose, which adds to the cost. With titanium catalysts, the very high polycondensation speeds cannot be fully utilized in practice because of the strong degree of yellowing; the concentration of the Ti catalyst has to be reduced, or its activity has to be tempered by various means, so that one settles for a polycondensation speed similar to that obtained when using antimony at levels of about 200 ppm. Titanium catalysts are partially commercialized recently. But they cannot be used to increase productivity levels of current PET processes, and at best are only substitutes for reproducing the catalytic activity corresponding to about 200 ppm of antimony.

It is desired to increase the productivity of PET production using the PTA process. In principle this is possible by merely increasing antimony concentrations. If the antimony level is increased beyond 200 ppm, the polycondensation times are reduced till about 500 ppm, after which there is no reduction in reaction times. The other problem is that the polymer becomes progressively darker with increasing antimony concentration. In textiles, the colours of dyed fabrics have a higher intensity if the base polymer is intrinsically bright and does not have a dull, gray cast. About 300 ppm of antimony is the practical limit where the colour may be tolerable. Thus, in current industrial practice, 200-300 ppm of antimony is used.

The cause for the gray colour found with antimony based PET has been attributed to reduction of the catalyst to the metal form. It has been shown that in an ethylene glycol atmosphere, small amounts of CO and other gases are formed in the esterification reactor due to thermal decomposition of the ethylene glycol [see Aharoni, Journal of Polymer Sci. & Engineering, 38, 1039 (1998)]. The CO is a reducing agent and it reduces the antimony compound to a finely-divided metallic antimony. Aharoni indicates that with antimony-based catalysts, 10-15 % of the initially added catalyst ends up as finely divided antimony metal. Thus increasing the antimony level beyond the standard of about 200-300 ppm automatically increases the amount of metallic antimony deposited in the polymer, and this makes it darker. The chemical reduction to metallic antimony also leads to the deposition of a black sludge in reactors, causing downtime during cleaning operations. This is unavoidable as the decomposition of the EG is unstoppable and hence the presence of CO is also inevitable. Thus, current polyester productivity cannot be increased by antimony alone.

Antimony compounds have the best all-round properties amongst PET catalysts during melt polymerisation, leading to high productivity and polymers with good thermal stability. Industrially, in the PTA process antimony catalysts are used in the range of $3.19 \times 10^{-4}$ to $4.73 \times 10^{-4}$ mol Sb metal/mol PTA (200-300 ppm antimony metal, with respect to the PET). The melt polycondensation times can be reduced by increasing antimony beyond $4.73 \times 10^{-4}$ mol Sb metal/mol PTA (300 ppm antimony metal) up to a concentration of about $7.89 \times 10^{-4}$ mol Sb metal/mol PTA (500 ppm antimony metal), after which the reaction times reach a limiting value with increasing concentration. However, it is not practical to enhance the polycondensation speed by using antimony levels in excess of $4.73 \times 10^{-4}$ mol Sb metal/mol PTA (300 ppm antimony metal) as the polymer becomes too dark due to the precipitation of metallic antimony. Thus, current technology cannot increase PET polymerisation productivity using antimony as the catalyst because the dark colour is an obstacle. Further antimony is suspected of being an environmentally hazardous material. Thus, there is a desire to replace antimony.

In order to increase productivity, several patents have disclosed combinations of antimony with zinc, cobalt, manganese and other elements (see US patents Application Ser. No. 07/355534, US patent 5008230, US patent 5166311, US patent 5153164, US patent 5162488 and European patent EP 0399742). This leads to reduction in polycondensation times by up to 1/3 without darkening the polymer. However, these are still compositions with substantial amounts of antimony.

PET is used mainly for textile fibres, filaments, films and bottle grade chips. By far most of the PET (about 80%) goes into the production of fibres and filaments. Filaments are continuous yam and are spun at speeds of 3500-4000 m/min. This is called polyester partially oriented yam (POY). Polyester fibres are made from filaments spun at lower speeds (~900-1200 m/min.), which are then stretched and cut to make staple fibres (38 mm average cut-fibre length). The typical specifications for the PET fibre and filament include an I.V. of about 0.63 dL/g. For PET staple fibres, the homopolyester is usually used. For POY and high speed spinning of continuous filaments, a crystallisation inhibitor is incorporated. Typically, this is a comonomer such as pentaerythritol. Isophthalic acid (IPA) is used as a comonomer for making bottle grade PET, where it delays crystallisation, but it is generally not used for fibre and filament grade PET. However, IPA modified PET can also be spun into fibres and filaments successfully, and this is done so industrially, using recycled bottle grade PET copolymerized with IPA.

It is an object of the present invention to overcome the disadvantages of the prior art, especially to provide a process for the production of polyethylene terephthalate copolyester using a more environmentally friendly catalyst, while at the same time increasing the polycondensation productivity and decreasing the respective costs, resulting in a polyethylene terephthalate copolyester which may be advantageously utilized in the production of textile fibers, filaments, films or bottle grade chips.

This object is achieved by a process for the production of polyethylene terephthalate copolyester from terephthalic acid, isophthalic acid and ethylene glycol, comprising the steps of: a) preparing a catalyst composition containing a zinc compound as the only catalyst compound being present such that the elemental zinc content is in a range of 50 to 500 ppm, based on the copolyester, b) placing the catalyst composition, terephthalic acid, isophthalic acid and ethylene glycol in a vessel, and c) reacting the terephthalic acid, isophthalic acid and ethylene glycol in an esterification step and a polycondensation step in the presence of the catalyst composition of step a) to obtain polyethylene terephthalate copolyester.

The isophthalic acid is present in an amount of about 0.5 to 5 weight percent, preferably 0.1 to 2 weight percent, most preferably 0.1 to 0.8 weight percent, based on the weight of the copolyester.

The inventive process may further comprise, after polycondensation, directly extruding the copolyester from the vessel into fibers, filaments, films or strands for ships.

In one embodiment, the esterification step is conducted at a temperature of about 230 to about 260°C, preferably under nitrogen pressure, and wherein the polycondensation step is conducted at a temperature of about 270 to about 290°C.

The polycondensation step may be conducted in a batch process in the melt phase under high vacuum, until an intrinsic viscosity of the copolyester of about 0.55 to about 0.66 dL/g, preferably 0.60 to 0.65 dL/g is obtained.

In a further and most preferable embodiment, the esterification and the polycondensation step are conducted in a continuous process using a train of reactors in series.

Preferably, a melt I.V. stabiliser, typically a phosphorus compound, is added at the end of polymerization before extrusion into fibres, filaments and films.

More preferably, the melt I.V. stabiliser is typically phosphoric acid, polyphosphoric acid; organophosphorus compounds such as organophosphates, organophosphites, and organophosphonates; and quaternary phosphonium compounds.

In one embodiment the melt I.V. stabilizer is added at the end of polycondensation with a phosphorous content of about 15 to about 150 ppm.

The polycondensation step may also be conducted in a split operation using first a melt phase polycondensation step under high vacuum and subsequently a solid-state polycondensation step, under vacuum or inert gas flow.

The solid-state polycondensation step may be conducted in a batch or continuous operation.

Moreover, it is preferred that phosphoric acid in an amount of about 10 to about 30 ppm is added to the vessel, based on the weight of the copolyester.

More preferably, at least one colour correction agent, such as cobalt acetate and/or blue toner, is added to the vessel.

In one embodiment, the catalyst composition is placed in the vessel before, during or after the esterification step.

Preferably, the copolyester obtainable in the inventive process may be used for producing textile fibers, filaments, films and bottle grade chips.

Most preferably, the copolymer is used for preparing textile fibers, filaments and films.

Still preferably, the copolyester may be used in a direct melt-spinning process.

Preferably, the zinc compound is selected from the group consisting of zinc acetate, zinc oxide, zinc peroxide, zinc sulphide, zinc carbonate, zinc hydroxide, zinc halide, zinc metal or mixtures thereof.

Surprisingly, it was found that the inventive process results in a reduction of polycondensation times by about half compared with the industrially used antimony catalyst, while at the same time giving a brighter polymer compared with equivalent polyethylene terephthalate copolyesters made with that antimony catalyst. Further, the copolyester obtained meets the requirements for direct spinning of textile grades fibers and filaments with an intrinsic viscosity of about 0.63 dL/g.

The essential characteristic of the inventive process is the combined use of the specific catalyst disclosed and the incorporation of small amounts of isophthalic acid comonomer.

Zinc compounds are additionally advantageous as their price is about 1/3 of the price of the respective antimony compound.

It was mentioned that zinc is used as the transesterification catalyst in the PET made by the DMT or transesterification route; but for the polycondensation step, the zinc is deactivated with phosphorous compounds and is replaced with antimony as the polycondensation catalyst. According to the prior art mentioned, zinc compounds have not been used alone in the direct esterification process because their polycondensation efficacy was believed to be lower than that of most other catalysts. According to Tomita, the catalytic activity and the I.V. attained is governed by the ratio of propagation to depolymerisation. Zinc has a higher depolymerisation activity compared with antimony, tin and titanium (see K. Tomita, Polymer, 17, 221 (1976)).

Our experiments with homopolyester PET using zinc alone as the catalyst confirmed the literature expectations. The required I.V. of ~ 0.63 dL/g simply could not be reached, under polycondenastion times as long as that given to antimony (more than 2 hours). However, very surprisingly, we found that the addition of small quantities of isophthalic acid (an isomer of PTA) as a comonomer made the zinc catalyst in a very specified range effective and the required I.V, of 0.63 dL/g could be attained in about half the time compared with 200 ppm of antimony catalyst. A similar behaviour of catalytic activity is not seen with the antimony catalyst in the presence of IPA. Outside the specific range of zinc, the target I.V. was not attained. Similarly, without the IPA, the target I.V. was not reached. Another positive feature is that zinc polymers compared with PET made with antimony have a brighter appearance.

The copolyester obtained in the process of the invention may be advantageously utilized in a direct spinning process, that is the polymer melt from the final polycondensation reactor is spun into fibres directly, without converting them to textile chips. Most modern plants now have direct spinning. Direct spinning minimises the effect of high carboxylic contents and therefore reduces hydrolytic degradation. Design features in the continuous plant configuration such as reducing the distance between the melt discharge-point (from the final reactor) to the extrusion/spinning head will also help in minimising the I.V. drop that might occur due to high carboxyl. Further, the I.V. stability of the melt can be increased by quenching the activity of the zinc with well-known and readily available phosphorous compounds, such as phosphoric acid or polyphosphoric acid, organophosphorus compounds such as organophosphates, organophosphites, and organophosphonates, and quaternary phosphonium compounds. Normally, a small amount of a phosphorus compound (15-25 ppm P) is added in antimony-catalysed PET production with the PTA process, right at the beginning (before esterification). Also, in the former DMT process, it was a common practice to sequester or deactivate the zinc (used for the transesterifcation step) with phosphorus compounds, before the start of polycondensation when the antimony catalyst is added (see U.S. patent 5898059). The phosphorus compounds are believed to complex with metal ions and deactivate them. In the case of the zinc-catalysed PET copolyester made with the PTA process here, it is possible to make adaptations whereby a phosphorus compound (25 to about 150 ppm of P) is introduced at the end of melt polymerisation, and the stabilised melt is then extruded into fibres, filaments and films.

Apart from the carboxyl end group concentration, the diethylene glycol (DEG) content in PET is another important concern. DEG is a side product derived from ethylene glycol mostly during esterification. DEG is a diol and acts as comonomer that gets incorporated into the polymer chain. DEG lowers the melting point but increases the dyeability of the fibers. While excessive DEG is to be avoided, the most important factor is that the DEG level produced is constant; variability in the DEG content leads to variable colour shades on dyeing. The zinc catalysts used in the inventive process give a slightly higher content of DEG in the polyethylene terephthalate than that found with antimony catalysts, but the level is constant for a given catalyst concentration. Both DEG and IPA however help with ease of dyeability.

Examples

The following examples are intended to be illustrative of this invention only. They are, of course, not to be taken in any way as limiting on the scope of this invention. Numerous changes and modifications can be made with respect to the invention.

Various PETs were made in a bench-scale reactor using the PTA process. All the results are summarized in Tables 1 - 5. First, the results of antimony catalyst (200 ppm of Sb) for the homopolyester (Table 1) are shown. Next the effect of zinc catalyst with the homopolyester (Table 1) is demonstrated. Following this, the PET copolyester with IPA using antimony alone and then zinc as catalyst (Table 2) were examined. We also examined PET copolymers with IPA made with zinc catalyst and colour correction ingredients (Table 3). The SSP behaviour of IPA co PET (PET copolyester with IPA) made with zinc is shown in Table 4. Table 5 shows some additional polymer properties of the IPA co PET made with colour correction agents.

All polymers were made in a conical-shaped batch reactor with capacity of 10 litres. All ingredients (PTA, EG, IPA, antimony triacetate, zinc compound, cobalt acetate, blue toner, and phosphoric acid) were added together at the beginning. The esterification reaction was conducted at 253°C under nitrogen pressure. This led to the formation of molten DGT. After the expected amount of water was collected, the vessel was heated to 278°C and a vacuum of about 1 mbar (100 Pa) was applied to start polycondensation. The melt was stirred with an agitator. When polycondensation starts, the stirrer torque rises due to the increasing melt viscosity resulting from the increase in molecular weight. The intrinsic viscosity or I.V. is a measure of the molecular weight of the polymer and is measured by dilute solution viscometry. By previous calibration, it was known that for the standard polymer recipe of example 2 (see below), a stirrer torque of 13.5 Nm corresponds to an I.V. of ~ 0.63-0.66 dL/g. All polymers from the reactor were discharged when the agitator torque reached 13.5 Nm. The melt was discharged in the form of a single molten strand into a quenching water bath by breaking the vaccum and applying nitrogen pressure. The strand was fed to a chip cutter to form transparent, amorphous chips. The discharge time for the reactor was about 20 minutes.

Although the stirrer torque of 13.5 Nm was established as corresponding to an I.V. of 0.63-0.66 dL/g, this is strictly for the antimony-based polymer, which is less sensitive to I.V. drop during the 20 minute discharge time from the reactor. For the zinc polymer, due to the high carboxyl content, it was felt that the I.V. of the final pellets could be substantially lower than 0.63 dL/g, due to degradation during the discharge period. For some other catalysts, we have observed the I.V. measured in the pellets could be as low as 0.55-0.58 dL/g, even though the reaction was stopped at a torque of 13.5 Nm. Hence, the I.V. of the pellets from each reaction was measured.

Selected samples were also subjected to solid-state polymerization (SSP). In this, the amorphous chips with I.V. of about 0.64 dL/g made by melt phase polymerization, were polymerized further at 210°C (that is, in the solid state). First the transparent, amorphous chips were heated at 170°C for 1 hour to crystallize the chips and prevent their subsequent sticking during SSP at 210°C. The crystallized chips were then placed in a bench scale SSP reactor at 210°C. Dry nitrogen was passed through the chip bed and this carries away the volatiles (EG and water) from polycondensation. The SSP was conducted at 210°C for 6 hours, and the I.V.s of the standard IPA co PET with antimony only and with the zinc catalyst were compared.

As mentioned, the intrinsic viscosity or I.V. is a measure of the molecular weight of the polymer and is measured by dilute solution viscometry. The I.V. is influenced predominantly by polymer molecular weight, but the solvent type and the solution temperature also have an effect on its numerical value. I.V. values for the same polymer will be different if different solvents and temperatures are used. All the I.Vs. here were measured in a 3 : 2 mixture of phenol-1, 2 dichlorobenzene solution, at 25°C. The method is based on a single measurement at a single concentration. Typically, about 8-10 chips are dissolved to make a solution with a concentration of about 0.5%. The I.V. was obtained from the measurement of relative viscosity $\eta r$ for a single polymer concentration (0.5%) by using the Billmeyer equation [see F.W. Billmeyer, J. of Polymer Sci. IV, 83 (1949)] shown below:

$$I.V.= [\eta] = 0.25\ (\eta_r - 1 + 3\ \ln\ \eta_r)/c$$

(valid for the range c = 0.5 - 0.65 g/dL)

The colour parameters were measured with a HunterLab ColorFlex Model No 45/0, serial No. CX 0969. The amorphous chips were used without grinding or crystallisation, in the transparent state. Generally, the changes measured could also be seen by eye. The L* values after SSP are higher because of whitening caused by spherultic crystallisation of the polymer.

Initially, a 'standard homopolyester' was made using antimony. This polymer used a standard antimony concentration of 3.19 x 10$^{-4}$ mol Sb/mole PTA (200 ppm of Sb). 200 ppm of Sb is in the range used in industrial production. The recipe consisted of 2287 g PTA (mols of PTA), 1100 g EG, 1.3 g of antimony triacetate catalyst (200 ppm of antimony metal with respect to polymer), and 0.195 g of phosphoric acid (19.8 ppm P). This recipe yields 2645.4 g of PET theoretically. All the materials were added right at the beginning in the batch reactor. In addition, phosphoric acid was added as a melt stabilizer to increase the stability of the melt towards thermal degradation. All the polymerizations were stopped when a stirrer torque of 13.5 Nm was reached. By calibration, it had been established that a torque of 13.5 Nm corresponded to an I.V. of about 0.63-0.66 dL/g (see Table 1, Comparative Example 1). The key parameters are the polycondensation time, the total reaction time and the I.V. (Table 1). The polycondensation time was 114 minutes for comparative example 1 in Table 1 and the total time was 293 minutes. The I.V. was 0.648 dL/g.

Comparative Examples 2-6 in Table 1 show the effect of using zinc catalyst instead of antimony to make PET homopolyester. Even the lowest value of zinc (217 ppm, Comparative Example 2, Table 1) corresponds to more than double the mole concentration in 200 ppm of antimony. Yet, from Table 1, Comparative Examples 2-6, it can be seen that the desired torque of 13.5 Nm (i.e. I.V. of ~ 0.63-0.64 dL/g) was not achieved with any concentration of zinc compound.

The literature shows that zinc was assumed to be a poor polycondensation catalyst compared with antimony. Tomita shows that zinc has a lower constant for the forward propagation reaction, and a higher constant for the chain breaking reaction, compared with antimony [see K. Tomita, Polymer, 17, 221 (1976)]. Tomita shows that if I.V. is plotted versus time for a number of catalytically active metals (at the same mole concentrations), all curves reach a maximum I.V. after a characteristic time, after which the I.V. starts to drop. The curves for Ti showed the highest rise and the highest peak I.V., followed by tin and antimony. For Ti, after about 1.5 hours, the peak I.V. of about 1.2 dL/g is reached. For antimony, the peak I.V. is about 1.0 dL/g and it is reached after 4 hours. Zinc is amongst the lowest curve - the peak I.V. was about 0.8 dL/g and was reached after 5 hours (see Tomita). Likewise, Shah et al. performed a similar experiment examining metals at a constant mole concentration and the I.V. reached in a fixed polycondensation time of 1 hour. For Ti, an I.V. of 0.662 dL/g was reached in 1 hour; for tin, an I.V. of 0.567 dL/g was reached in 1 hour; for Sb, an I.V. of 0.522 dL/g in 1 hour; for zinc, an I.V. of only 0.440 dL/g was obtained in 1 hour [see T.H. Shah, J.I. Bhatty, G.A. Gamlen and D. Dollimore, Polymer, 25, 1333 (1984)]. Thus according to Shah, the polycondensation activity follows the trend Ti>Sn>Sb>Mn>Zn>Pb. Ti, Sn and Sb gave the highest I.V., and zinc among the lowest. Thus, all efforts to find antimony replacement catalysts focus mostly on Ti (see for example US patent 6 255, 441).

Comparative Examples 2-6 in Table 1 confirm the literature reports of Tomita as well as Shah et al., which were for PET homopolyester. No matter what concentration of zinc is used, the torque of 13.5 Nm could not be reached in any useful polycondensation time (less than ~ 130 minutes, corresponding to 200 ppm antimony). The torque versus time was plotted in real time as the polycondensation proceeded. The zinc-catalysed polycondensations in Table 1 were stopped when it could be seen that a plateau is reached early in the torque-versus-time curve, so that it was fruitless to keep the melt at high temperature. In some cases such as Comparative Example 4, with 376 ppm of Zn, the I.V. plateau was reached after 70 minutes of polycondensation and hence the reaction was terminated. It was thought that this could be because the vacuum was not as good in Comparative Example 4 compared with Comparative Example 1 (1.52 mbar versus 1.0 mbar). Comparative Example 5 was therefore a repeat with 376 ppm of Zn but with a higher vaccum and longer time; a vacuum of 0.98 mbar was attained and the polycondensation was allowed to go on for 135 minutes, yet a torque of only 7.2 Nm could be attained. Even in the two cases where torques of 12.1 and 12.0 Nm were reached at the plateau, it could be seen that a prohibitively long time (much greater than 130 minutes) would be taken to reach torque of 13.5 Nm, compared with the antimony example. Using polycondensation times longer than 130 minutes was also not considered worthwhile with the zinc catalyst, due to pronounced yellowing and degradation of the polymer.

However, contrary to the literature and comparative examples 2 to 6, we have surprisingly found that when zinc catalyst is used in the presence of small levels of the comonomer IPA, the required I.V. of 0.63-0.64 dL/g is reached in faster times compared with the standard antimony levels of 200 ppm. These results are shown Table 2. From Comparative Example 7 (Table 2), it can be seen that with 1.55 % IPA and 200 ppm antimony, an I.V. of 0.666 dL/g is reached in 133 minutes of polycondensation time. Examples 8 to 13 and comparative examples 14 to 16 in Table 2 use zinc in the range 64 ppm to 782 ppm of Zn and an IPA of 1.55%. From example 8 (Table 2) it can be seen that a torque of 10.0 Nm is reached even with 64 ppm of zinc. From Example 9 (Table 2), it can be seen that with 128 ppm of zinc a torque 11.0 Nm was reached in 95 minutes. From example 10 (Table 2), with 189 ppm of Zn, a torque of 13.0 Nm was reached in 93 minutes for the 1.55% IPA co PET; the I.V. was 0.636 dL/g and so this will be taken as the target achieved.

Examples 11 to 13 (Table 2) are 1.55 % IPA co-PETs made with 241, 376 and 439 ppm of zinc, respectively. It can be seen that a torque of 13.5 Nm was successfully achieved with I.V.s of 0.619, 0.629 and 0.634 dL/g respectively. The polycondensation times are greatly reduced (72, 67 and 75 minutes) compared with 200 ppm antimony (133 minutes). The total reaction times are also lower compared with the 200 ppm antimony.

Comparative Examples 14 to 16 in Table 2 show that as the concentration of zinc is increased beyond 500 ppm, the torque of 13.5 Nm is not attained. Thus, there is no gain in going to higher Zn concentrations. It is clear that the zinc concentration versus polycondensation time goes through a mimimum. The most active concentrations lie between 180 and 260 ppm of zinc for 1.55 % IPA coPET (Table 2).

Example 17 in Table 2 shows that after halving the IPA to 0.775 %, the zinc catalyst is still active. With 376 ppm of Zn and 0.775% IPA, a torque of 13.5 Nm is attained in 54 minutes of polycondensation time. In fact, comparing Example 12 in Table 2 which is 376 ppm of Zn with 1.55% IPA, with Example 17 which is 376 ppm of Zn with 0.775% IPA, we see the latter combination in fact give lower polycondensation and reaction times.

Table 3 shows the results of 1.55% IPA co-PET made with the zinc catalyst and with colour compensation additives. Blue toner and cobalt (II) acetate are frequently used to correct yellowness. Comparative Example 18 in Table 3 shows that with 200 ppm of Sb, a torque of 13.5 Nm is reached in a polycondensation time of 128 minutes and a total time of 305 minutes. The I.V. was 0.644 dL/g. The L* = 57.2; a*= -3.5 and b* = -5.1. The colour corrected antimony polymer has a blue tint (negative b* value) but it is a little dark (low L*). Examples 19 and 20 show 1.55% IPA co-PET made with zinc oxide and zinc acetate catalyst respectively, where the zinc content in each polymerisation was the same (171 ppm). It can be seen that the polycondensation times to reach a torque of 13.5 Nm are much lower than 200 ppm of antimony (85 and 82 minutes, versus 128 minutes); similarly the total times are 235 and 237 minutes respectively, versus 306 minutes for the 200 ppm of antimony. The I.V.s attained were 0.636 and 0.637 dL/g respectively, and are similar to the antimony polymer (Examples 19 and 20, Table 3). The colour values for Examples 19 and 20 in Table 3 show higher L* values (63.6 and 63.2) versus 57.2 for the antimony polymer in Table 3 - that is, the zinc polymers are visibly brighter. The b* values are comparable for the zinc and antimony polymer. The a* values for the colour compensated zinc polymer are a little more negative than desired, giving a green tint. However, this can be fine tuned. Two other polymer properties, namely the carboxyl content and the diethylene glycol (DEG) content are shown in Table 5. From Example 19 and 20 in Table 5, it can be seen that the carboxyl content (71 mVal/kg) is almost double that obtained from the antimony (38.8 mVal/kg, Comparative Example 18, Table 5). This means that the PET made from the zinc catalysts would be more prone to hydrolysis and I.V. drop if remelted, and hence should be extruded into films and fibres directly from the reactor with a short residence time in the melt. The DEG contents of the zinc polymers in Examples 19 and 20 in Table 5 are higher than the antimony polymer in Comparative Example 18 in Table 5. This makes dyeing of fibres and filaments easier. Examples 18 and 20 in Tables 3 and 5 also show that the source of the zinc does not matter (oxide or acetate). Essentially equivalent results are obtained for the same ppm of Zn (or mole concentration of $Zn^{++}$ ion) for both the oxide and acetate.

Examples 21 and 22 in Table 3 show 1.55 % IPA co-PET with the colour compensation additives and 205 ppm of zinc (from zinc oxide and zinc acetate respectively). In both cases, the polycondensation times (66 minutes) and the total times (216 minutes) were identically reduced. These have to be compared with the 200 ppm of antimony where we have 128 minutes for the polycondensation time and 306 minutes for the total time (Comparative Example 18, Table 3). It can be seen that there is a drastic reduction by using zinc at the prescribed levels. The I.V.s attained in Examples 21 and 22 (Table 5) were 0.630 dL/g which is acceptable for textiles. The colour values for Examples 21 and 22 in Table 3 show higher L* values (62.6 and 63.4) versus 57.2 for the antimony polymer in Table 3. Again the zinc polymers are visibly brighter. The b* values in Examples 21 and 22 are comparable for the zinc and antimony polymer. The a* values for the colour compensated zinc polymers in Examples 21 and 22 in Table 3 are more negative than desired, giving a green tint. However, this can be fine-tuned. From Example 21 and 22 in Table 5, it can be seen that the carboxyl content (-66 mVal/kg) is much higher than that obtained from the antimony (38.8 mVal/kg). Again, this means that the PET made from the zinc catalysts would be more prone to hydrolysis and I.V. drop if remelted, and hence should be extruded into films and fibres directly from the reactor with a short residence time in the melt. The DEG contents of the zinc polymers in Examples 21 and 22 in Table 5 are higher than the antimony polymer in Comparative Example 18 in Table 5. This makes dyeing of fibres and filaments easier. Examples 21 and 22 also prove that the source of the zinc does not matter and the times depend solely on the ppm or moles of Zn $^{++}$.

Example 23 and 24 in Table 3 show the use of 256 ppm of zinc (from oxide and acetate respectively) to make 1.55% IPA co-PET with colour compensation additives (cobalt acetate and blue toner). The polycondensation time to reach torque of 13.5 Nm is reduced further to 57 minutes, compared with 128 minutes for the 200 ppm antimony catalysts. The I.V.s attained are 0.621 and 0.613 dL/g respectively. These are a little lower, even though when the reaction was stopped, the torque had reached 13.5 Nm; there has been a drop in I.V. during the reactor discharge time. It was mentioned that due to the higher carboxyl content in the zinc polymer, the I.V. retention of the polymer may be lower; this is observed more with the highest zinc concentration (256 ppm, Examples 23 & 24, Table 3). Thus for I.V. retention, it is better to work with lower levels of Zn (170-205 ppm, Examples 19-22, Table 3) where a suitable combination of reduction in polycondensation time is obtained with sufficient I.V. retention. The colour values for Examples 23 and 24 in Table 3 show higher L* values (63.7 and 62.9) versus 57.2 for the antimony polymer in Table 3 -again, the zinc polymers are visibly brighter. The b* values are comparable for the zinc and antimony polymer. The a* value for the colour compensated zinc polymer is more negative than desired, giving a green tint. However, this can be fine-tuned. From Example 23 and 24 in Table 5, it can be seen that the carboxyl content (69 and 66 mVal/kg) is much higher than that obtained from the antimony (38.8 mVal/kg). This means that the PET made from the zinc catalysts would be more prone to hydrolysis and I.V. drop if remelted, and hence should be extruded into films and fibres directly from the reactor with a short residence time in the melt. Again, the DEG contents of the zinc polymers in Examples 23 and 24 in Table 5 are higher than the antimony polymer in Comparative Example 18 in Table 5. This makes dyeing of fibres and filaments easier. Examples 23 and 24 in Tables 3 and 5 also prove that the source of the zinc does not matter and the times depend solely on the ppm or moles of Zn $^{++}$.

Examples 19 to 24 in Table 3 support the results of Table 2 showing that zinc as a catalyst is effective with IPA modified PET in attaining I.V.s of 0.63-0.64 dL/g, which is typically needed for textile applications. It contrasts with homopolyester PET synthesis where zinc shows a low activity as a polycondensation catalyst, as established in the prior art and also shown by the Comparative Examples 2-6 in Table 1.

Bottle grade PET is made by a split process whereby an intermediate polymer with I.V. of about 0.63 dL/g is made by melt polymerization and then is subjected to solid-state polymerization to uplift the I.V. to about 0.70-0.85 dL/g; the high I.V. end of this range is used for carbonated drinks where the bottles are pressurised, while the low I.V. end is suitable for non-carbonated drinks. The I.V. lift after SSP depends on SSP temperature, SSP time, the nature of the catalyst and its concentration.

Frequently, the bottle grade PET is an IPA co-PET. Hence, the 1.55% IPA polymers (with colour compensation) made by melt polycondensation with the zinc catalyst were subjected to SSP (210°C for 6 hours) and compared with an equivalent made by the split process with 200 ppm antimony. The results are shown in Table 4. It can be seen that the zinc polymers generally show lower SSP rate than the 200 ppm antimony polymer, as they reach an I.V. of ~0.72 dL/g (Examples 2-7, Table 4) whereas the antimony polymer reaches ~ 0.77 dL/g (Example 1, Table 4). The zinc concentration between 171-256 ppm (Table 4) did not seem to make much difference to the final I.V. attained (~0.72 dL/g). Thus, the zinc catalyst can be used in the split process (that is, melt polycondensation followed by SSP), but it is more suitable for producing bottle grade polymers where the I.V. requirement is relatively low (-0.70-0.75 dL/g). The zinc catalysts are most effective when used in melt polymerization with IPA as a comonomer to reach the I.V.s needed for textile fibres, filaments and films (~0.55-0.63 dL/g).

Table I - Comparative examples showing the results for PET homopolyester made with antimony or zinc catalysts.

| 'Total Time' is the total reaction time (reactor heat-up + esterification + polycondensation) to reach a fixed agitator torque of 13.5 Nm (corresponding to I.V. of about 0.64 dL/g). | | | | | | | | | |
|---|---|---|---|---|---|---|---|---|---|
| Ex. | IPA (%wt/wt) | Sb (ppm) | Zn (ppm) | Torque (Nm) | I.V. (dL/g) | Vacuum (mbar) | Polycondensation time (mins). | Total Time (mins) | Comments |
| 1 (Comp.) | 0 | 200 | 0 | 13.5 | 0.648 | 1.0 | 114 | 293 | With Co, blue |
| 2 (Comp.) | 0 | 0 | 217 | 12.1 | - | 1.45 | 90 | 250 | Torque versus time curve reached a plateau at this value |
| 3 (Comp.) | 0 | 0 | 241 | 12.0 | - | 1.09 | 95 | 265 | " |
| 4 (Comp.) | 0 | 0 | 376 | 4.1 | - | 1.52 | 70 | 230 | " |
| 5 (Comp.) | 0 | 0 | 376 | 7.2 | - | 0.98 | 135 | 290 | " |
| 6 (Comp.) | 0 | 0 | 439 | 1.55 | - | 1.55 | 115 | 275 | " |

Table 2 - IPA copolyesters with antimony and zinc catalysts, without colour compensation

| Ex. | IPA (%wt/wt) | Sb (ppm) | Zn (ppm) | Torque (Nm) | IV. (dL/g) | L* | a* | b* | Vacuum (mbar) | Polycondensation time (mins). | Total time (mins) |
|---|---|---|---|---|---|---|---|---|---|---|---|
| 7 (Comp.) | 1.55 | 200 | 0 | 13.5 | 0.666 | 64.7 | -1.3 | 3.13 | 0.57 | 133 | 313 |
| 8 | 1.55 | 0 | 64 | 10.0 | - | - | - | - | 1.45 | 125 | 290 |
| 9 | 1.55 | 0 | 128 | 11.9 | - | - | - | - | 1.48 | 95 | 260 |
| 10 | 1.55 | 0 | 189 | 13.0 | 0.636 | 70.0 | -1.99 | 8.94 | 1.45 | 93 | 260 |
| 11 | 1.55 | 0 | 241 | 13.5 | 0.619 | 70.6 | -1.85 | 6.79 | 1.44 | 72 | 242 |
| 12 | 1.55 | 0 | 376 | 13.5 | 0.629 | 70.2 | -1.79 | 5.83 | 1.45 | 67 | 227 |
| 13 | 1.55 | 0 | 439 | 13.5 | 0.634 | 70.6 | -1.94 | 5.84 | 1.45 | 75 | 235 |
| 14 (Comp.) | 1.55 | 0 | 562 | 12.5 | - | - | - | - | 1.48 | 85 | 240 |
| 15 (Comp.) | 1.55 | 0 | 647 | 11.6 | - | - | - | - | 1.64 | 100 | 255 |
| 16 (Comp.) | 1.55 | 0 | 782 | 10.4 | - | - | - | - | 1.58 | 110 | 265 |
| 17 | 0.775 | 0 | 376 | 13.5 | | | | | 1.35 | 54 | 214 |

Table 3 - IPA copolyesters with zinc catalysts, and colour compensation with 15.7 ppm Co from cobalt acetate and 0.0053 g blue toner

| Ex. | IPA (%wt/wt) | Sb (ppm) | Zn (ppm) | Zinc compound | Torque (Nm) | I.V. (dL/g) | L* | a* | b* | Vacuum (mbar) | Polycondensation time (mins). | Total time (mins) |
|---|---|---|---|---|---|---|---|---|---|---|---|---|
| 18 (Comp.) | 1.55 | 200 | 0 | - | 13.5 | 0.644 | 57.2 | -3.5 | -5.1 | 1.14 | 128 | 306 |
| 19 | 1.55 | 0 | 171 | ZnO | 13.15 | 0.636 | 63.6 | -5.5 | -4.6 | 1.28 | 85 | 235 |
| 20 | 1.55 | 0 | 171 | Zn (ac)2 | 13.5 | 0.637 | 63.2 | -6.2 | -3.4 | 1.19 | 82 | 237 |
| 21 | 1.55 | 0 | 205 | ZnO | 13.5 | 0.630 | 62.6 | -5.0 | -7.2 | 1.34 | 66 | 216 |
| 22 | 1.55 | 0 | 205 | Zn (ac)2 | 13.5 | 0.630 | 63.4 | -5.8 | -6.0 | 1.77 | 66 | 216 |
| 23 | 1.55 | 0 | 256 | ZnO | 13.5 | 0.621 | 63.7 | -5.4 | -7.3 | 1.46 | 57 | 207 |
| 24 | 1.55 | 0 | 256 | Zn (ac)2 | 13.5 | 0.613 | 62.9 | -5.1 | -6.4 | 1.48 | 57 | 202 |

Table 4 - Properties after SSP, 6 h, 210°C. Example numbers are the same as in Table 3. Colour compensation means addition of cobalt and blue toner (see Table 3)

| Example | Zn (ppm) | Sb (ppm) | Starting I.V. (dL/g) | SSP I.V. (dL/g) | Comments |
|---------|----------|----------|----------------------|-----------------|----------|
| 18 (Comp.) | 0 | 200 | 0.644 | 0.771 | With colour compensation |
| 19 | 171 | 0 | 0.636 | 0.722 | " |
| 20 | 171 | 0 | 0.637 | 0.719 | " |
| 21 | 205 | 0 | 0.630 | 0.714 | " |
| 22 | 205 | 0 | 0.630 | 0.731 | " |
| 23 | 256 | 0 | 0.621 | 0.735 | " |
| 24 | 256 | 0 | 0.613 | 0.724 | " |

Table 5 -Properties of IPA modified PET copolyester made with antimony or zinc catalyst, with colour compensation. The samples are the same as in Table 3.

| Example | Zn (ppm) | Sb (ppm) | I.V. (dL/g) | COOH (mVal/kg) | DEG (% wt/wt) | Comments |
|---------|----------|----------|-------------|----------------|---------------|----------|
| 18 (Comp.) | 0 | 200 | 0.644 | 38.8 | 2.0 | With colour compensation |
| 19 | 171 | 0 | 0.636 | 71.0 | 2.24 | " |
| 20 | 171 | 0 | 0.637 | 70.5 | 2.50 | " |
| 21 | 205 | 0 | 0.630 | 66.5 | 2.25 | " |
| 22 | 205 | 0 | 0.630 | 66.0 | 2.41 | " |
| 23 | 256 | 0 | 0.621 | 69 | 2.47 | " |
| 24 | 256 | 0 | 0.613 | 66 | 2.26 | " |

The features disclosed in the foregoing description or in the claims may, both separately and in any combination thereof, be material for realizing the invention in diverse forms thereof.

**Claims**

1. Process for the production of polyethylene terephthalate copolyester from terephthalic acid, isophthalic acid and ethylene glycol, comprising the steps of:

   a) preparing a catalyst composition containing a zinc compound as the only catalyst compound being present such that the elemental zinc content is in a range of 50 to 500 ppm, based on the copolyester,
   b) placing the catalyst composition, terephthalic acid, isophthalic acid and ethylene glycol in a vessel, and
   c) reacting the terephthalic acid, isophthalic acid and ethylene glycol in an esterification step and a polycondensation step in the presence of the catalyst composition of step a) to obtain polyethylene terephthalate copolyester.

   wherein the isophthalic acid is present in an amount of 0.5 to 5 weight percent, based on the weight of the copolyester.

2. Process according to claim 1, further comprising, after polycondensation, directly extruding the copolyester from the vessel into fibers, filaments, films or strands for chips.

3. Process according to any of the preceding claims, wherein the esterification step is conducted at a temperature of 230 to 260°C, and wherein the polycondensation step is conducted at a temperature of about 270 to about 290°C.

4. Process according to any of the preceding claims, wherein the polycondensation step is conducted in a batch process in the melt phase under high vacuum, until an intrinsic viscosity of the copolyester of 0.55 to 0.66 dL/g, is obtained, wherein the intrinsic viscosity is measured at 25°C in a 3:2 mixture of phenol and 1,2-dichlorobenzene solution having a concentration of copolyester of 0.5%.

5. Process according to any of the preceding claims 1 to 3, wherein the esterification and the polycondensation step are conducted in a continuous process using a train of reactors in series.

6. Process according to any of the preceding claims, wherein a phosphorus compound, is added at the end of polymerization before extrusion into fibres, filaments and films as a melt I.V. stabilizer.

7. Process according to claim 6, wherein the phosphorous compound is phosphoric acid, polyphosphoric acid; organophosphorus compounds such as organophosphates, organophosphites, and organophosphonates; or quaternary phosphonium compounds, or mixtures thereof.

8. Process according to claim 6 or 7, wherein the phosphorous compound is added at the end of polycondensation with a phosphorous content of about 15 to about 150 ppm.

9. Process according to any of the preceding claims 1 to 8, wherein the polycondensation step is conducted in a split operation using first a melt phase polycondensation step under high vacuum and subsequently a solid-state polycondensation step, under vacuum or inert gas flow.

10. Process according to claim 9, wherein the solid-state polycondensation step is conducted in a batch or continuous operation.

11. Process according to any of the preceding claims, wherein at least one colour correction agent, such as cobalt acetate and/or blue toner, is added to the vessel.

12. Process according to any of the preceding claims, wherein the catalyst composition is placed in the vessel before or during the esterification step.

13. Process according to any of the preceding claims, wherein the zinc compound is selected from the group consisting of zinc acetate, zinc oxide, zinc peroxide, zinc sulphide, zinc carbonate, zinc hydroxide, zinc halide, zinc metal or mixtures thereof.

**Patentansprüche**

1. Verfahren zur Herstellung von Polyethylenterephthalat-Copolyester aus Terephthalsäure, Isophthalsäure und Ethylenglykol, bei dem man:

   a) eine Katalysatorzusammensetzung herstellt, die als einzige Katalysatorverbindung eine Zinkverbindung enthält, welche in einer solchen Menge vorhanden ist, daß der Gehalt an elementarem Zink im Bereich von 50 bis 500 ppm, bezogen auf den Copolyester, liegt,
   b) die Katalysatorzusammensetzung, die Terephthalsäure, die Isophthalsäure und das Ethylenglykol in einen Behälter gibt und
   c) die Terephthalsäure, die Isophthalsäure und das Ethylenglykol in einem Veresterungsschritt und einem Polykondensationsschritt in Gegenwart der Katalysatorzusammensetzung aus Schritt a) zu Polyethylenterephthalat-Copolyester umsetzt,

   wobei die Isophthalsäure in einer Menge von 0,5 bis 5 Gewichtsprozent, bezogen auf den Copolyester, vorliegt.

2. Verfahren nach Anspruch 1, bei dem man ferner nach der Polykondensation den Copolyester direkt aus dem Behälter zu Fasern, Filamenten, Folien oder Strängen für Chips extrudiert.

3. Verfahren nach einem der vorhergehenden Ansprüche, bei dem man den Veresterungsschritt bei einer Temperatur von 230 bis 260°C und den Polykondensationsschritt bei einer Temperatur von 270 bis 290°C durchführt.

4. Verfahren nach einem der vorhergehenden Ansprüche, bei dem man den Polykondensationsschritt in einem diskontinuierlichen Verfahren in der Schmelzephase unter Hochvakuum durchführt, bis man eine intrinsische Viskosität des Copolyesters von 0,55 bis 0,66 dL/g erhält, wobei die intrinsische Viskosität bei 25°C in Lösung in einer Mischung aus Phenol und 1,2-Dichlorbenzol im Verhältnis 3:2 mit einer Copolyesterkonzentration von 0,5% gemessen wird.

5. Verfahren nach einem der vorhergehenden Ansprüche 1 bis 3, bei dem man den Versterungsschritt und den Polykondensationsschritt in einem kontinuierlichen Verfahren unter Verwendung einer Abfolge hintereinandergeschalteter Reaktoren durchführt.

6. Verfahren nach einem der vorhergehenden Ansprüche, bei dem man am Ende der Polymerisation vor der Extrusion zu Fasern, Filamenten und Folien eine Phosphorverbindung als Schmelze-I.V.-Stabilisator zusetzt.

7. Verfahren nach Anspruch 6, bei dem es sich bei der Phosphorverbindung um Phosphorsäure, Polyphosphorsäure; Organophosphorverbindungen wie Organophosphate, Organophosphite und Organophosphonate; oder quartäre Phosphoniumverbindungen oder Mischungen davon handelt.

8. Verfahren nach Anspruch 6 oder 7, bei dem man die Phosphorverbindung am Ende der Polykondensation mit einem Phosphorgehalt von 15 bis 150 ppm zusetzt.

9. Verfahren nach einem der vorhergehenden Ansprüche 1 bis 8, bei dem man den Polykondensationsschritt im Splitmodus durchführt, indem man zunächst einen Schmelzephasen-Polykondensationsschritt unter Hochvakuum und danach einen Festphasen-Polykondensationsschritt unter Vakuum oder Inertgasstrom verwendet.

10. Verfahren nach Anspruch 9, bei dem man den Festphasen-Polykondensationsschritt in diskontinuierlichem oder kontinuierlichem Modus durchführt.

11. Verfahren nach einem der vorhergehenden Ansprüche, bei dem man mindestens ein Farbkorrekturmittel, wie Cobaltacetat und/oder Blautöner, in den Behälter gibt.

12. Verfahren nach einem der vorhergehenden Ansprüche, bei dem man die Katalysatorzusammensetzung vor dem Veresterungsschritt oder während des Veresterungsschritts in den Behälter gibt.

13. Verfahren nach einem der vorhergehenden Ansprüche, bei dem man die Zinkverbindung aus der Gruppe bestehend aus Zinkacetat, Zinkoxid, Zinkperoxid, Zinksulfid, Zinkcarbonat, Zinkhydroxid, Zinkhalogenid, metallischem Zink oder Mischungen davon auswählt.

**Revendications**

1. Procédé de production de copolyesters à base de poly(éthylène téréphtalate) à partir d'acide téréphtalique, d'acide isophtalique et d'éthylène glycol, comprenant les étapes suivantes:

   a) préparer une composition de catalyseur contenant un composé du zinc en tant que seul composé catalyseur présent de telle sorte que la teneur en zinc élémentaire se trouve dans une plage de 50 à 500 ppm, sur la base du copolyester,
   b) placer la composition de catalyseur, l'acide téréphtalique, l'acide isophtalique et l'éthylène glycol dans une cuve, et
   c) faire réagir l'acide téréphtalique, l'acide isophtalique et l'éthylène glycol au cours d'une étape d'estérification et d'une étape de polycondensation en présence de la composition de catalyseur de l'étape a) pour obtenir le copolyester à base de poly(éthylène téréphtalate),

   dans lequel l'acide isophtalique est présent en une quantité de 0,5 à 5 pour cent en poids sur la base du poids du copolyester.

2. Procédé selon la revendication 1, comprenant en outre, après polycondensation, l'extrusion directe du copolyester, depuis la cuve, en fibres, filaments, films ou brins pour granulés.

3. Procédé selon l'une quelconque des revendications précédentes, dans lequel l'étape d'estérification est conduite à une température de 230 à 260°C, et dans lequel l'étape de polycondensation est conduite à une température de 270 à 290°C.

4. Procédé selon l'une quelconque des revendications précédentes, dans lequel l'étape de polycondensation est conduite selon un procédé discontinu en phase fondue sous vide poussé, jusqu'à ce que soit obtenue une viscosité intrinsèque du copolyester de 0,55 à 0,66 dL/g, dans lequel la viscosité intrinsèque est mesurée à 25°C dans un mélange 3/2 de phénol et de solution de 1,2-dichlorobenzène ayant une concentration de copolyester de 0,5%.

5. Procédé selon l'une quelconque des revendications précédentes 1 à 3, dans lequel l'étape d'estérification et l'étape de polycondensation sont effectuées selon un procédé continu avec utilisation d'un train de réacteurs en série.

6. Procédé selon l'une quelconque des revendications précédentes, dans lequel un composé phosphoré est ajouté à la fin de la polymérisation avant l'extrusion en fibres, filaments et films, en tant que stabilisant de la viscosité intrinsèque en phase fondue.

7. Procédé selon la revendication 6, dans lequel le composé phosphoré est l'acide phosphorique, un acide polyphosphorique ; des composés organophosphorés tels que des organophosphates, des organophosphites et des organophosphonates ; ou des composés phosphonium quaternaire, ou des mélanges de ces derniers.

8. Procédé selon la revendication 6 ou la revendication 7, dans lequel le composé phosphoré est ajouté à la fin de la polycondensation avec une teneur en phosphore de 15 à 150 ppm.

9. Procédé selon l'une quelconque des revendications précédentes 1 à 8, dans lequel l'étape de polycondensation est conduite en une opération en deux parties utilisant d'abord une étape de polycondensation en phase fondue sous vide poussé, et ensuite une étape de polycondensation à l'état solide, sous vide ou circulation de gaz inerte.

10. Procédé selon la revendication 9, dans lequel l'étape de polycondensation à l'état solide est conduite au cours d'une opération discontinue ou continue.

11. Procédé selon l'une quelconque des revendications précédentes, dans lequel au moins un agent de correction de couleur, tel que l'acétate de cobalt et/ou un toner bleu, est ajouté dans la cuve.

12. Procédé selon l'une quelconque des revendications précédentes, dans lequel la composition de catalyseur est placée dans la cuve avant ou pendant l'étape d'estérification.

13. Procédé selon l'une quelconque des revendications précédentes, dans lequel le composé du zinc est sélectionné dans le groupe constitué de l'acétate de zinc, de l'oxyde de zinc, du peroxyde de zinc, du sulfure de zinc, du carbonate de zinc, de l'hydroxyde de zinc, d'un halogénure de zinc, du zinc métallique ou de mélanges de ces derniers.

EP 1 593 702 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5898059 A
- US 355534 A
- US 5008230 A
- US 5166311 A
- US 5153164 A
- US 5162488 A
- EP 0399742 A
- US 6255441 A

**Non-patent literature cited in the description**

- **T.H. SHAH ; J.I. BHATTY ; G.A. GAMLEN ; D. DOLLIMORE.** *Polymer,* 1984, vol. 25, 1333
- **T.H. SHAH et al.** *Polymer,* 1984, vol. 25, 1333
- **K. TOMITA.** *Polymer,* 1976, vol. 17, 221
- **AHARONI.** *Journal of Polymer Sci. & Engineering,* 1998, vol. 38, 1039
- **F.W. BILLMEYER.** *J. of Polymer Sci.,* 1949, vol. IV, 83

16